# EUROPÄISCHE PATENTSCHRIFT

(11) **EP 2 090 029 B1**
(45) Veröffentlichungstag und Bekanntmachung des Hinweises auf die Patenterteilung: **15.09.2010**
(21) Anmeldenummer: 07821806.2
(22) Anmeldetag: 24.10.2007
(51) Int. Cl.: H04W 76/02

(54) **AUFBAU VON KOMMUNIKATIONSVERBINDUNGEN ZWISCHEN FAHRZEUGEN**
ESTABLISHMENT OF COMMUNICATIONS CONNECTIONS BETWEEN VEHICLES
ÉTABLISSEMENT DE LIAISONS DE COMMUNICATION ENTRE DES VÉHICULES

(30) Priorität: 25.10.2006 DE 102006051079; 24.10.2007 DE 102007051079
(43) Veröffentlichungstag der Anmeldung: 19.08.2009
(73) Patentinhaber: Continental Teves AG & Co. oHG, 60488 Frankfurt (DE)
(72) Erfinder: HESSE, Michael, 65760 Eschborn (DE); STÄHLIN, Ulrich, 65760 Eschborn (DE)
(86) Internationale Anmeldenummer: PCT/EP2007/061443
(87) Internationale Veröffentlichungsnummer: WO 2008/049868

(56) Entgegenhaltungen:
- DE-A1-102004 056 724
- GB-A- 2 358 506
- US-A- 5 274 699
- US-A1- 2004 209 605

## Beschreibung

Die Erfindung bezieht sich auf ein Verfahren zum Aufbau von Daten- und Kommunikationsverbindungen zwischen Fahrzeugen mit den oberbegrifflichen Merkmalen des Patentanspruchs 1 bzw. eine Vorrichtung gemäß des Patentanspruchs 6.

In digitalen Kommunikationssystemen, d. h. in Kommunikationssystemen, bei denen das zu übertragende Signal digitalisiert wird und in digitaler Form vom Sender an den Empfänger übertragen wird, beispielsweise in Mobilfunksystemen, kommt es für ein optimales und effizientes Management des gesamten Systems darauf an, die Anzahl der Bits zur Übertragung einer bestimmten Information möglichst gering zu halten. Eine solche Bit-Reduktion wird üblicherweise durch eine bestimmte Art der Quellcodierung erreicht. In existierenden Informationssystemen werden Informationen über lokale Ereignisse an zentralen Orten (Servern) zusammengetragen. Von dort werden die Informationen durch Funksysteme über einen Rundsenderuf (Broadcast) an die Verkehrsteilnehmer übermittelt. Derartige Systeme, wie z.B. Rundfunk auf Basis von analoger Übertragung oder digitaler Übertragung (DAB, Digital Audio Broadcasting) oder in Zukunft auf Basis von DVB-T/S (Digital Video Broadcasting - Terrestrial/Satellite) sind reine Broadcast-Systeme ohne Funktionen zur bidirektionalen Übertragung.

Alternativ können diese Informationen in Mobilfunknetzen, z.B. gemäss dem GSM-, GPRS oder dem UMTS-Standard (GSM: Global Fahrzeugtelematikvorrichtung for Mobile Communication; UMTS: Universal Mobil Telecommunication System), über Zusatzdienste, wie z.B. einem Kurznachrichtendienst (SMS: Short Message Service), lokale Funk-Datennetze (W-LAN: Wireless Local Areal Network) oder Informations-Dienste zur Verfügung gestellt werden. Hier kann bei Bedarf gezielt die gewünschte Information abgerufen werden. Bevor jedoch auf die Informationen zugegriffen werden kann, muss diese von dem Ort des Geschehens zu der zentralen Einheit (Server) übertragen werden. Erst von dort gelangt diese Information nach Verbindungsaufbau zu dem mobilen Endteilnehmer. Bevor diese Information vorliegt, sind somit Zeiten für die Übertragung zum Server und von dort zum Endteilnehmer aufgetreten, so dass die Aktualität der Nachricht darunter leidet und in vielen Fällen nutzlos ist, z.B. dann, wenn der Verkehrsteilnehmer sich bereits am oder nahe dem Ende des Staus befindet. Durch derzeitig existierende Funksysteme kann somit keine Übertragung zeitkritischer Nachrichten realisiert werden.

Die DE 102004056724A1 offenbart ein Verfahren zur Übertragung von Daten in einem Kommunikationsnetz mit direkter Fahrzeug-Fahrzeug Kommunikation, wobei ein empfangendes Fahrzeug Kommunikationssignale von einem sendenden Fahrzeug empfängt. Das empfangende Fahrzeug ermittelt oder aktualisiert eine Vertrauensinformation, wobei die Vertrauensinformation ermöglicht festzustellen, ob von dem sendenden Fahrzeug gesendete Daten vertrauenswürdig sind und/oder wie vertrauenswürdig von dem sendenden Fahrzeug gesendete Daten sind. Die Vertrauensinformation wird unter Verwendung eines Nutzer-Zertifikats ermittelt, das von einer vertrauenswürdigen Institution ausgegeben wurde und/oder das von einer Einrichtung des Kommunikationsnetzes unter Verwendung von Informationen aus einem ersten, von der vertrauenswürdigen Institution ausgegebenen Zertifikat erzeugt wurde.

Die DE 102004056724 ist auf ein Verfahren zum Aufbau von Kommunikationsverbindungen zwischen Fahrzeugen mittels in den Fahrzeugen befindlichen Telematikeinheiten gerichtet. Die Telematikeinheiten der Fahrzeuge bauen Kommunikationsverbindungen auf und tauschen dabei sicherheitsrelevante Informationen bzgl. der Übertragungssicherheit aus und um eine gesicherte Kommunikationsverbindung bereitzustellen.

Die US A 5274699 ist auf ein Verfahren zum Aufbau von Kommunikationsverbindungen zwischen mobilen Teilnehmerendgeräte gerichtet und offenbart, dass über eine Mensch Maschinenschnittstelle eines z.B. in einem Fahrzeug befindlichen ersten Teilnehmerendgerätes ein zu rufender zweiter Teilnehmer durch das den zweiten Mobilteilnehmer in seinem Fahrzeug repräsentierende Registrierungskennzeichen adressiert wird und dass diese Registrierungskennzeichen durch den ersten Mobilenteilnehmer in das erste Teilnehmerendgerät eingegeben wird. Das erste Teilnehmerendgerät stellt mit dem zweiten Teilnehmerendgerät eine Kommunikationsverbindung her. Ihm gerufenen zweiten mobilen Teilnehmer wird das Registrierungskennzeichen des ersten Mobilteilnehmer über das zweite Teilnehmerendgerät auf einer mit dem zweiten Teilnehmerendgerät verbundenen Mensch-Maschine-Schnittstelle ausgegeben. Dabei erfolgten Zuge des durch den zweiten Mobilteilnehmer durchgeführten "Call Screening" eine Bestätigung der Herstellung der Kommunikationsverbindung mit dem ersten Mobilteilnehmer durch eine von dem zweiten Mobilteilnehmer eingeforderte Eingabe über die mit dem zweiten Teilnehmerendgerät verbundene Mensch-Maschine-Schnittstelle.

Der Erfindung liegt daher die Aufgabe zu Grunde, ein alternatives Verfahren zum Aufbau von Kommunikationsverbindungen zwischen Fahrzeugen mittels in den Fahrzeugen befindlichen Telematikeinheiten zu finden.

Die Aufgabe wird erfindungsgemäß gelöst durch ein Verfahren mit den Merkmalen des Anspruch 1.

Der Vorteil der Erfindung ist eine effiziente Realisierung einer Kommunikations- und Datenverbindung zwischen mindestens zwei Fahrzeugen über eine einfache und zuverlässige Identifikation und Authentifikation der Fahrzeuge, zwischen denen eine Kommunikationsverbindung hergestellt werden soll.

Abhängige Ansprüche sind auf bevorzugte Ausführungsformen der Erfindung gerichtet.

Die Aufgabe wird dadurch gelöst, dass die Telematikeinheit durch den jeweiligen Fahrer aktiviert wird und über eine Mensch-Maschine Schnittstelle der im ersten Fahrzeug befindlichen Telematikeinheit das zu rufende Fahrzeuges repräsentierende Registrierungskennzeichen durch den Fahrer des ersten Fahrzeugs in die im ersten Fahrzeug befindliche Telematikeinheit eingegeben wird und die Telematikeinheit des ersten Fahrzeuges mit mindestens einer zweiten Telematikeinheit eines zweiten Fahrzeuges eine Kommunikationsverbindung herstellt,
und eine Überprüfung des Registrierungskennzeichnen durch die Telematikeinheit des zweite Fahrzeuges über die hergestellte Kommunikationsverbindung erfolgt und dem Fahrer des zweiten Fahrzeugs das Registrierungskennzeichnen des ersten Fahrzeugs über die Telematikeinheit auf einer mit der Telematikeinheit verbunden Mensch-Maschine Schnittstelle im Fahrzeug ausgegeben wird, wobei eine Bestätigung der Herstellung einer Kommunikationsverbindung mit dem ersten Fahrzeug durch eine vom Fahrer des zweiten Fahrzeugs eingeforderte Eingabe über die im zweiten Fahrzeug befindliche mit Telematikeinheit verbunden Mensch-Maschine Schnittstelle erfolgt.

Nach der Erfindung ist es vorgesehen dass die Kommunikationsverbindung mittels einer Nahbereichskommunikation erfolgt.

Erfindungsgemäß ist es vorgesehen dass die Herstellung der Kommunikationsverbindung im unicast mode und/oder multicast und/oder broadcast Mode und/oder geocast mode erfolgt.

Es ist nach der Erfindung vorgesehen, dass eine Identifizierung und Authentifizierung der Fahrer von der jeweiligen Telematikeinheit über eine Schnittstelle, an der erfasste Daten einer automatischen Umfelderkennung von Registrierungskennzeichnen bereitgestellt werden, durchgeführt wird.

Hierdurch werden zusätzlich Information zur Erkennung der angefragten Fahrzeuge in vorteilhafter Weise herangezogen.

Zur Bestätigung der Kommunikation- und Datenverbindung erfolgt mittels einer Mensch-Maschine-Schnittelle, wobei das Registrierungskennzeichen des ersten Fahrzeugs in einer Wiedergabeeinheit des zweiten Fahrzeugs angezeigt wird.

Die Aufgabe wird ebenso durch eine Vorrichtung zum Aufbau von Kommunikationsverbindungen zwischen Fahrzeugen, die Schnittstellen zur Eingabe und Ausgabe von Daten aufweisen, gelöst, wobei Mittel zur Aktivierung der Telematikeinheit, Mittel zur Eingabe und Speicherung eines Registrierungskennzeichens, Mittel zum Aufbau einer Kommunikationsverbindung und Mittel zum Bestätigen der Kommunikationsverbindung vorhanden sind.

Es ist bei der Vorrichtung vorgesehen, dass über die Mittel zur Eingabe eines Registrierungskennzeichens ein Registrierungskennzeichen multimodal eingegeben wird.

Erfindungsgemäß ist bei der Vorrichtung vorgesehen, dass die Mensch-Maschine Schnittstelle und die Widergabeeinheit in einem elektronischen Display integriert sind. Hierbei kann die Wiedergabe als ein Display mit einer in eine Gehäuse mit entsprechenden Schnittstellen realisiert sein. Es ist auch angedacht, daß die Wiedergabe unabhängig von einem Gehäuse, somit getrennt an einem vom Ort im Fahrzeuginneren vom Fahrer leicht ansehbar angebracht wird.

Nach der Erfindung wird für die Vorrichtung vorgesehen, das die Vorrichtung als ein Modul in einer Telematikeinheit eingebaut wird.

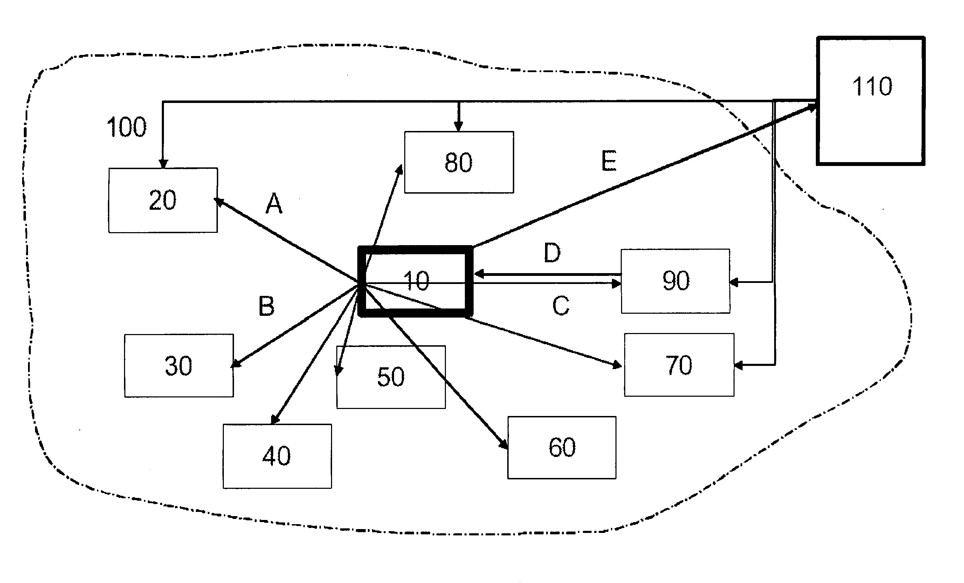

Die einzige Fig. 1 zeigt den Informationspfade der Erfindung auf.

Die Ausführungsbeispiele der Erfindung wird im Folgenden an Hand der Fig. 1 näher beschrieben.

Zwischen den Fahrern von zwei oder mehr Fahrzeugen soll eine Kommunikationsverbindung in Form einer Sprach und/oder Datenverbindung aufgebaut werden. Um sich zu authentifizieren und identifizieren wird hierzu die Information des Registrierungskennzeichnen eingesetzt. Als Registrierungskennzeichen können neben von außen sichtbaren Kennzeichen auch Kennzeichen die in Fahrzeugkomponenten in digitaler Form vorliegend genutzt werden, wie die eineindeutige Seriennummer einer Fahrzeugkomponente.

Im Folgenden wird als eine erste Ausführungsform die Herstellung einer Kommunikationsverbindung zwischen zwei Fahrzeugen dargestellt. Für weitere Fahrzeuge, die sich an den Kommunikationsvorgang beteiligen möchten, ist die Funktionsweise des Verfahrens in analoger Weise übertragbar.

Im Fahrzeug 10 wird das vorab dem Fahrer des Fahrezuges 10 bekannt Registrierungskennzeichen von bspw. dem Fahrzeug 90 durch den Fahrer in die Telematikeinheit mittels multimodoler Engabeschnittstellen eingeben. Das Fahrzeug 10 versendet das Registrierungskennzeichen mit dem eigenen Registrierungskennzeichen, das des Fahrezgus 10, an alle im Umfeld befindlichen Fahrzeug 20 bis 90. Das Fahrzeug 90 nimmt durch mittels einer Erkennung des eigenen Registrierungskennzeichens die Kommunikationsanfrage an, wenn es sich um das eigene Registrierungskennzeichen handelt.

In einer weiteren Ausgestaltung erfolgt der Aufbau einer Kommunikationsverbindung (Sprache oder Daten) durch eine direkte Kommunikationsverbindung von Fahrzeug zu Fahrzeug. Hierzu wird jede Telematikeinheit der kontaktierbaren Fahrzeuge zuerst generell hierfür vom Fahrer aktiviert. Anzumerken ist, dass alle Fahrzeuge 10 bis 90 jeweils mit einer Telematikeinheit ausgestattet sind und nicht explizit in der Fig. 1 dargestellt sind, sondern somit Bestandteil des jeweiligen Fahrzeuges sind. Als Fahrzeug wird immer ein Fahrzeug mit einer Telematikeinheit verstanden.

Beim Aufbau einer direkten durch den Fahrer aktivierten Kommunikations- und Datenverbindung, die als eine Nahbereichkommunikations- und Nahbeichreichsdatenverbindung wie DSRC , WLAN oder anderer Nahbereichskommunikationsverbindung ausgelegt ist, sind die Fahrzeuge in Sichtweite und können miteinander nach dem Aufbau der Kommunikationsverbindung Informationen austauschen. Sind die Fahrzeuge so weit voneinander entfernt, dass sie nicht direkt miteinander kommunizieren können leiten die dazwischen liegenden Fahrzeuge die auszutauschenden Informationen weiter. Hierdurch wird ein sicheres Netzwerk aufgebaut, das sehr leistungsfähig ist und eine gute Lastverteilung des Datenaufkommens zwischen den Fahrzeugen aufweist.

Um eine zielgerichtete Weiterleitung der Kommunikationsfrage von dem Fahrer zu ermöglichen, kommen erfindungsgemäß Protokolle zum Einsatz. Diese haben die Aufgabe, einen Pfad vom Quell- zum Zielfahrzeug zu bestimmen. Je nach vorliegenden örtlichen Verhältnissen der Fahrzeuge zu einander ist es möglich diese möglichst kurz zu gestalten oder möglichst gering belastete Regionen des Netzes bzw. Region 100 zu nutzen. Hierdurch werden möglichst wenig Einträge umfassende Routingtabellen, welche ständig aktualisiert werden, wenn Fahrzeuge "verschwinden", sich bewegen oder neue erscheinen erstellt. Die Zeit und die Anzahl der Einträge in der Routingtabelle, die zum Auffinden einer Verbindungsroute benötigt werden, sind in der erfindungsgemäßen Ausführung sehr kurz.

Wie bereist erwähnt erfolgt das Einberufen einer Kommuniaktions- und Datenverbindung über die Eingabe der bzw. des Registrierungskennzeichens, die einzeln oder aus einer Liste mit der Möglichkeit der Mehrfachauswahl, die dem Fahrer nach Aktivierung anzeigt wird. Die Einträge und Elemente werden automatisch für die anzeigte Liste erzeugt. Nach der Aktivierung versendet die Telematikeinheit im broadcast Mode die eigene Registrierung A,B,C und schaltet sich auf einen sogenannten Lausch-Zustand. Erhält es eine Antwort, die in Form des Registrierungskennzeichens des jeweiligen Fahrzeuges ist wird das empfangene Registrierungskennzeichen dann in die Liste in der Telematikeinheit abgelegt und für den Fahrer visualisiert.

Jede Telematikeinheit umfasst somit einen Verzeichnisdienst, der eine zentrale Sammlung von Registrierungskennzeichen zur Verfügung stellt. Somit können gespeicherten Registrierungskennzeichens verglichen, gesucht, erstellt, modifiziert und gelöscht werden. In einfachester Form wird dies durch ein Look-Up-Tabelle umgesetzt. In einer Ausgestaltung ist der Verzeichnisdienst als Lightweight Directory Access Protocol (LDAP) Verzeichnisdienst ausgeführt, wobei in der Telematikeinheit ein Speicher vorhanden ist, der zum Aufbau eines LDAP-Servers ausreichend ist. Oder als ein Modul an die Telematikeinheit über Schnittstellen der Telematikeinheit verbunden werden kann.

Will der Fahrer des ersten Fahrzeugs 10 eine Kommunikationsverbindung, für bspw. Sprache oder Daten, mit einem Fahrzeug 90 aufbauen, so gibt er seine Telematikeinheit über eine Sprachschnittstelle oder eine anders geartete Mensch-Maschine-Schnittstelle (MMS) das jeweilige Registrierungskennzeichnen, z.B. das für den Straßenverkehr vergebene Registrierungskennzeichen des gesuchten Fahrzeuges 90 ein oder wählt es aus seiner Liste der Verzeichnisdienst aus.

Die aktive und zu senden bereite Telematikeinheit des Fahrzeuges 10 baut daraufhin nacheinander mit allen zum Empfang bereiten Fahrzeugen 20-90, die mit einer Telematikeinheit ausgestatten sind und in der Umgebung 100 befinden eine Kommunikationsverbindung in Form einer reinen Datenverbindung auf und überprüft über diese Datenverbindung das Registrierungskennzeichnen der jeweiligen Fahrzeuge 20 bis 90. Ist das Fahrzeug das angeforderte Fahrzeug 90, so bekommt der Fahrer des Fahrzeugs 90 das Registrierungskennzeichnen des anfragenden Fahrzeugs 10 auf einer Wiedergabeeinheit der Telematikeinehit des Fahrzeuges 90, somit im eigenen Fahrzeug angezeigt, verbunden mit der Frage einer Bestätigung, ob eine Kommunikationsverbindung, bspw. für Sprache oder Daten mit diesem Fahrzeug 10 aufgebaut werden soll. Stimmt der Fahrer des Fahrzeugs 90 zu, so wird die Kommunikationsverbindung (Sprache oder Daten) zwischen den beiden Fahrzeugen aufgebaut und hergestellt. Hierdurch können dann auch SMS und MMS zwischen den Fahrzeugen ausgetauscht werden.

Der Erfindung nach wird eine Daten- bzw. Kommunikationsverbindung mittels unicast -, multicast -, geocast - Routing und das braodcast forwarding abhängig von der Eingabe bzw. Auswahl der Anzahl der Registrierungsinformation durch den Fahrer aufgebaut. Bei der Eingabe eines Registrierungskennzeichens und der Eingabe der Aufforderung eine Daten bzw. Kommunikationsverbindung zu einem weiteren Fahrzeug herzustellen wird das unicast Routing eingesetzt, das eine Daten bzw. Kommunikationsverbindung zu einem einzelnen Fahrzeug hergestellt. Bei der Eingabe von mindestens zweier Registrierungskennzeichen werden entweder durch das multicast-Routing Daten bzw. Kommunikationsverbindungen zu mehreren Fahrzeugen oder durch das Geocast Routing Daten bzw. Kommunikationsverbindung von Fahrzeuge zu Fahrzeuge in einem bestimmten geographischen Bereich aufgebaut. Es ist auch vorgesehen, durch ein broadcast Forwarding Fahrzeuge in der Senderreichweite kontaktierbar sind.

Erfindungsgemäß ist es angedacht, dass das Fahrzeug 10 bei der Auswahl mehr als ein Registrierungskennzeichen eingeben und eine Dreierkonferenz oder eine Konferenzschaltung initiieren kann. Hierbei können drei und mehr Fahrzeuge teilnehmen. Die Konferenzschaltung ist erfindungsgemäß in der Art ausgelegt, das z.B. bei einer Konferenzschaltung der Fahrzeuge 10, 20, 30 sich das Fahrzeug 40 dazuschalten kann oder von den Fahrzeugen 10, 20, 30 zu der bestehenden Konferenz eingeladen wird. Jedes Fahrzeug mit einer Telematikeinheit kann sich somit selbständig in eine Konferenzschaltung über die Eingabe bzw. Bestätigung eines Registrierungskennzeichens eines an einer Konferenzschaltung beteiligten Fahrzeuge einwählen bzw. jedes Fahrzeug kann zusätzlicher Fahrzeuge zu der laufenden Konferenzschaltung einberufen.

Auf Grund der speziellen Bedingungen in den Umgebung des eine Kommunikationsverbindung aufbauenden Fahrzeuges, bzw. den anfragen Fahrer werden die üblicherweise im Internet eingesetzten Routingalgorithmen nicht verwendet, da die Fahrzeuge kein Vorwissen über die Topologie des Netzwerkes besitzen. Die Fahrzeuge müssen diese selbst erkunden und selbst aufbauen. Erfindungsgemäß existiert bei Bedarf und vorliegen von bestimmten Voraussetzugen, wie z.B. dass keine Fahrzeuge in Kommunikationsreichweite für den Fahrer erkennbar sind die Möglichkeit zum Speichern von Routinginformationen in einer zentralen Instanzen, wie z.B. einem Internet Service Provider (ISP), um hierdurch gewonne Inforamtion über die vorliegenden Netztopologie und den hierdurch verbundenen Routinginformationen weiteren Fahrzeugen kenntlich zu machen, damti dieses "Wissen" effektiv genutz werden kann.

In einer zweiten Ausführungsform erfolgt der Aufbau der Kommunikationsverbindung von einem Fahrzeug 10 zuerst zu einer Infrastruktur 110 und dann zu einem von dem Fahrzeug 10 angefragten Fahrzeug 90. Hierbei baut die Telematikeinheit des Fahrzeugs 10 beispielsweise eine Verbindung zu einem Internet Service Provider (ISP) auf. Ist das Registrierungskennzeichnen des Fahrzeugs bei diesem Provider für den einen Kommunikationsdienst, wie Sprache oder Daten, registriert und freigegeben, so erfolgt analog zur bereits beschriebene Ausführungsform der Fahrzeug zu Fahrzeug Variante eine Anfrage beim Fahrer des Fahrzeugs 90 mit anschließenden Aufbau der Kommunikationsverbindung D.

Der Erfindung nach ist es zur Vereinfachung der Mensch-Maschine-Schnittstelle (MMS) eine Telematikeinheit mit automatischen Erkennung von Registrierungskennzeichnen vorgesehen. Die Telematikeinheit liefert dem Fahrer des Fahrzeugs 10 dann zur Auswahl die Registrierungskennzeichnen von Fahrzeug 20 bis 90 in der Umgebung des Fahrzeugs 10. Die Telematikeinheit wird über eine drahtgebunden oder mobile Schnittstelle mit den Sensorkomponenten des Fahrzeugs 10 verbunden. Besitzt das Fahrzeug z.B. eine Sensorik zur Umfelderfassung, werden die von der Sensorik ermittelten Umfelddaten der Telematikeinheit zur Verfügung gestellt. Die Telematikeinheit kann die zur Verfügung gestellten Umfelddaten zur Verifikation heranziehen. Besitzt das Fahrzeug 10 ein Fahrerassistenzsystem mit einer Kamera, wird die Information der Kamera hinsichtlich der vorhandenen Registrierungskennzeichens ausgewertet und mit den empfangenen Registrierungskennzeichen verglichen. In der Patentanmeldung DE 10 2007 007 283.1 der Anmelderin wird offenbart, wie eine Analyse hinsichtlich eines Registrierungskennzeichens erfolgt.

## Patentansprüche

1. Verfahren zum Aufbau von Kommunikationsverbindungen zwischen einem ersten Fahrzeug und mindestens einem zweiten Fahrzeug mittels in den Fahrzeugen befindlichen Telematikmatikeinheiten, wobei über eine Mensch-Maschine Schnittstelle der im ersten Fahrzeug befindlichen Telematikeinheit das zu rufende Fahrzeug repräsentierende Registrierungskennzeichen durch den Fahrer des ersten Fahrzeugs in die im ersten Fahrzeug befindliche Telematikeinheit eingegeben wird und die Telematikeinheit des ersten Fahrzeuges mit mindestens einer zweiten Telematikeinheit eines zweiten Fahrzeuges eine Kommunikationsverbindung herstellt,
**dadurch gekennzeichnet,**
**dass** eine Überprüfung des Registrierungskennzeichens durch die Telematikeinheit des zweiten Fahrzeuges über die hergestellte Kommunikationsverbindung erfolgt und dem Fahrer des zweiten Fahrzeugs das Registrierungskennzeichen des ersten Fahrzeugs über die Telematikeinheit auf einer mit der Telematikeinheit verbunden Mensch-Maschine Schnittstelle im zweiten Fahrzeug ausgegeben wird, wobei eine Bestätigung der Herstellung einer Kommunikationsverbindung mit dem ersten Fahrzeug durch eine vom Fahrer des zweiten Fahrzeugs eingeforderte Eingabe über die im zweiten Fahrzeug befindliche mit der Telematikeinheit des zweiten Fahrzeugs verbundenen Mensch-Maschine Schnittstelle erfolgt.

2. Verfahren nach Anspruch 1
**dadurch kennzeichnet,**
**dass** die Kommunikationsverbindung mittels einer Nahbereichskommunikation erfolgt.

3. Verfahren nach Anspruch 1 oder Anspruch 2
**dadurch kennzeichnet,**
**dass** die Herstellung der Kommunikationsverbindung im unicast mode oder multicast oder broadcast Mode oder geocast mode erfolgt.

4. Verfahren nach einem der vorgegangenen Ansprüche
**dadurch kennzeichnet,**
**dass** eine Identifizierung und Authentifizierung der Fahrer von der jeweiligen Telematikeinheit über eine Schnittstelle, an der erfasste Daten einer automatischen Umfelderkennung von Registrierungskennzeichnen bereitgestellt werden, durchgeführt wird.

5. Verfahren nach Anspruch 1 und Anspruch 2
**dadurch gekennzeichnet,**
**dass** mittels einer Mensch-Maschine-Schnittelle, das Registrierungskennzeichen des ersten Fahrzeugs in einer Wiedergabeeinheit des zweiten Fahrzeugs angezeigt wird.

## Claims

1. Method for setting up communication links between a first vehicle and at least one second vehicle using telematics units located in the vehicles, wherein the driver of the first vehicle uses a man-machine interface on the telematics unit located in the first vehicle in order to input registration identifiers, representing the vehicle to be called, into the telematics unit located in the first vehicle,
and the telematics unit in the first vehicle sets up a communication link to at least one second telematics unit in a second vehicle,
**characterized in that** the registration identifier is checked by the telematics unit in the second vehicle via the communication link which has been set up, and the registration identifier of the first vehicle is output to the driver of the second vehicle via the telematics unit on a man-machine interface connected to the telematics unit in the second vehicle, with setup of a communication link to the first vehicle being confirmed by an input, requested by the driver of the second vehicle, using the man-machine interface connected to the telematics unit in the second vehicle and located in the second vehicle.

2. Method according to Claim 1,
**characterized**
**in that** the communication link involves the use of short-range communication.

3. Method according to Claim 1 or Claim 2,
**characterized**
**in that** the communication link is set up in unicast mode or multicast or broadcast mode or geocast mode.

4. Method according to one of the preceding claims,
**characterized**
**in that** the drivers are identified and authenticated by the respective telematics unit using an interface on which captured data from an automatic environment recognition unit for registration identifiers are provided.

5. Method according to Claim 1 and Claim 2,
**characterized**
**in that** a man-machine interface is used to display the registration identifier of the first vehicle in a reproduction unit in the second vehicle.

## Revendications

1. Procédé pour établir des liaisons de communication entre un premier véhicule et au moins un deuxième véhicule au moyen d'unités télématiques qui se trouvent dans les véhicules, l'identifiant d'enregistrement qui représente le véhicule à appeler étant saisi par le conducteur du premier véhicule dans l'unité télématique qui se trouve dans le premier véhicule par le biais d'une interface homme-machine de l'unité télématique qui se trouve dans le premier véhicule et l'unité télématique du premier véhicule établissant une liaison de communication avec au moins une deuxième unité télématique d'un deuxième véhicule, **caractérisé en ce**
**qu'**un contrôle de l'identifiant d'enregistrement est effectué par l'unité télématique du deuxième véhicule par le biais de la liaison de communication établie et l'identifiant d'enregistrement du premier véhicule est présenté au conducteur du deuxième véhicule par le biais de l'unité télématique sur une interface homme-machine reliée avec l'unité télématique dans le deuxième véhicule, une confirmation de l'établissement d'une liaison de communication avec le premier véhicule s'effectuant par une saisie sollicitée par le conducteur du deuxième véhicule par le biais de l'interface homme-machine qui se trouve dans le deuxième véhicule et qui est reliée avec l'unité télématique du deuxième véhicule.

2. Procédé selon la revendication 1, **caractérisé en ce que** la liaison de communication s'effectue au moyen d'une communication de zone de proximité.

3. Procédé selon la revendication 1 ou 2, **caractérisé en ce que** l'établissement de la liaison de communication s'effectue en mode monodiffusion ou en mode multidiffusion ou en mode radiodiffusion ou en mode géodiffusion.

4. Procédé selon l'une des revendications précédentes, **caractérisé en ce qu'**une identification et une authentification du conducteur sont effectuées par l'unité télématique correspondante par le biais d'une interface à laquelle sont présentées les données acquises par une détection automatique de l'environnement des identifiants d'enregistrement.

5. Procédé selon les revendications 1 et 2, **caractérisé en ce que** l'identifiant d'enregistrement du premier véhicule est affiché par le biais d'une interface homme-machine sur une unité de reproduction du deuxième véhicule.
